(19) Europäisches Patentamt
European Patent Office
Office européen des brevets

(11) **EP 1 177 370 B1**

(12) **EUROPÄISCHE PATENTSCHRIFT**

(45) Veröffentlichungstag und Bekanntmachung des Hinweises auf die Patenterteilung:
**07.04.2010 Patentblatt 2010/14**

(21) Anmeldenummer: **00929346.5**

(22) Anmeldetag: **10.04.2000**

(51) Int Cl.:
*F01N 3/28* (2006.01)　　*B01J 35/04* (2006.01)

(86) Internationale Anmeldenummer:
**PCT/EP2000/003177**

(87) Internationale Veröffentlichungsnummer:
**WO 2000/068549 (16.11.2000 Gazette 2000/46)**

(54) **BRENNKRAFTMASCHINE MIT EINEM KLEINVOLUMIGEN KATALYSATOR**

INTERNAL COMBUSTION ENGINE COMPRISING A SMALL-VOLUME CATALYTIC CONVERTER

MOTEUR A COMBUSTION INTERNE A POT CATALYTIQUE DE FAIBLE ENCOMBREMENT

(84) Benannte Vertragsstaaten:
**DE ES FR GB IT**

(30) Priorität: **07.05.1999 DE 19921263**

(43) Veröffentlichungstag der Anmeldung:
**06.02.2002 Patentblatt 2002/06**

(73) Patentinhaber: **Emitec Gesellschaft für Emissionstechnologie mbH
53797 Lohmar (DE)**

(72) Erfinder:
• **BRÜCK, Rolf
D-51429 Bergisch Gladbach (DE)**
• **MAUS, Wolfgang
D-51429 Bergisch Gladbach (DE)**
• **WIERES, Ludwig
D-51491 Overath (DE)**

(74) Vertreter: **Kahlhöfer, Hermann et al
KNH Patentanwälte
Kahlhöfer Neumann Rößler Heine
Karlstraße 76
40210 Düsseldorf (DE)**

(56) Entgegenhaltungen:
EP-A- 0 807 466　　US-A- 5 510 086
US-A- 5 529 759　　US-A- 5 802 845

EP 1 177 370 B1

## Beschreibung

Die vorliegende Erfindung betrifft eine Brennkraftmaschine mit einem gegebenen Hubraum H und mit einem nachgeschalteten Katalysator zur Abgasreinigung. Entsprechend den gesetzlichen Vorschriften in den meisten Ländern ist es üblich, die Abgase von Verbrennungsmotoren mittels eines katalytischen Konverters zu reinigen, die im Abgassystem des Verbrennungsmotors angeordnet sind.

Bei der Auslegung von Abgasreinigungssystemen wurden in der Vergangenheit meist empirische Erkenntnisse zugrunde gelegt. In der WO 91/01178 sind beispielsweise Abgasreinigungssysteme beschrieben, die aus mehreren Wabenkörpern aufgebaut sind, so daß sich durch Größe und Anzahl dieser Wabenkörper ein gewünschtes Katalysatorvolumen für jede beliebige Größe des Hubraums einer Verbrennungsmaschine auswählen läßt. Wichtig ist dabei, daß letztendlich das Abgas so stark gereinigt wird, daß die gesetzlichen Vorschriften erfüllt werden können. Dies bedeutet in den meisten Ländern heutzutage, daß mehr als 98 % der schädlichen Anteile im Abgas, insbesondere der Kohlenwasserstoffe und/oder der Stickoxide in unschädliche Bestandteile umgewandelt werden, vorzugsweise sogar mehr als 99 %. Gemessen wird die Effektivität E anhand bestimmter vorgegebener Fahrzyklen oder in bestimmten Betriebszuständen.

Die bei der Auslegung eines Abgasreinigunssystems zu beachtenden Kriterien sind sehr zahlreich. Katalytische Konverter enthalten typischerweise Wabenkörper, deren Aufgabe es ist, eine genügend große geometrische Oberfläche zur Verfügung zu stellen, welche mit dem zu reinigenden Abgas in Kontakt kommt. Die Wabenkörper weisen im allgemeinen für das Abgas durchlässige Kanäle auf, die durch Wände voneinander getrennt sind. Für die Effektivität E eines Katalysators ist die geometrische Oberfläche O von entscheidender Bedeutung. Grundsätzlich kann man eine bestimmte gewünschte geometrische Oberfläche O durch Vergrößerung der Anzahl A der Wände in einem vorgegebenen Volumen oder durch eine Vergrößerung des Volumens bei vorgegebener Anzahl A an Wänden pro Querschnittseinheit. Berücksichtigt werden müssen bei der Auslegung weiterhin die Strömungsgeschwindigkeit und Strömungsverhältnisse in den Kanälen, die die Effektivität E beeinflussen, und der durch den Katalysator verursachte Druckverlust im Abgasstrom, der den Wirkungsgrad des Verbrennungsmotors beeinflußt. Natürlich hängt die Auslegung von der Querschnittsform des Wabenkörpers, von der Art der katalytisch aktiven Beschichtung, der Anströmung des Wabenkörpers und weiteren Parametern ab.

Im Zuge der Weiterentwicklung von Wabenkörpern als Trägerkörper für katalytisch aktives Material in einem Katalysator wurden die Wanddicken der Kanäle immer weiter reduziert, was sich günstig auf den Druckverlust auswirkt. Der Spielraum bei der Auslegung wurde dadurch immer größer, weil mit abnehmender Wanddicke immer kleinere Kanäle und damit immer größere geometrische Oberflächen pro Volumeneinheit bei akzeptablem Druckverlust realisierbar wurden. Trotzdem wurden die empirisch gefundenen Regelungen im wesentlichen beibehalten, so daß typischerweise bei Brennkranmaschinen das Volumen eines nachgeschalteten Katalysators in der gleichen Größenordnung wie der Hubraum liegt. Beispielsweise ist aus der US 5,802,845 ein Abgassystem bekannt, das Wabenkörper mit einem Gesamtvolumen von 100 bis 400% des Hubraums der Brennkraftmaschine umfasst.

Aufgabe der vorliegenden Erfindung ist es, eine Brennkraftmaschine mit nachgeschaltetem Katalysator anzugeben, bei der der Katalysator so ausgelegt ist, daß er eine gesetzlich geforderte hohe Effektivität E erreicht, aber ein signifikant kleineres Volumen V als der Hubraum H des Verbrennungsmotors aufweist und dabei preisgünstig herstellbar ist. Insbesondere soll der Wabenkörper im Katalysator aus metallischen, teilweise strukturierten Folien hergestellt sein.

Zur Lösung dieser Aufgabe dient eine Brennkraftmaschine mit einem nachgeschalteten Katalysator gemäß dem Anspruch 1. Vorteilhafte Ausgestaltungen sind in den abhängigen Ansprüchen angegeben.

Erfindungsgemäß ist einer Brennkraftmaschine mit einem Hubraum H ein Katalysator zur Abgasreinigung nachgeschaltet, wobei der Katalysator eine geometrische Oberfläche O hat, eine Effektivität E zur Umsetzung mindestens einer schädlichen Komponente im Abgas in unschädliche Bestandteile und wobei der Katalysator mindestens einen Wabenkörper aufweist und alle Wabenkörper zusammen ein Gesamtvolumen V haben, wobei das Volumen V so gewählt ist, daß es mindestens um den Faktor 0,6 kleiner ist als der Hubraum H und die geometrische Oberfläche O dabei aber so bemessen ist, daß der Katalysator eine Effektivität E von mehr als 98 % hat. Als Formeln lauten diese Bedingungen:

(a)

$$E > 98\ \%$$

(b)

$$V < 0,6\ H$$

Diese Wahl der Parameter hat einerseits den Vorteil, daß der Katalysator nur ein verhältnismäßig kleines Volumen beansprucht, was bei der Unterbringung im Motorraum und/oder unter der Bodenwanne eines Kraftfahrzeuges erleichtert. Natürlich muß die geometrische Oberfläche O pro Volumeneinheit gegenüber großvolumigen Katalysatoren erhöht werden, um die notwendige Effektivität E zu erreichen. Während man früher davon ausging, daß die dazu notwendigen dünneren Kanalwände die Kosten bei der Herstellung kleinvolumiger Wabenkörper mit großer geometrischer Oberfläche erhöhen, ergibt eine genaue Analyse überraschenderweise, daß dies nicht zutrifft, wie im folgenden insbesondere anhand aus metallischen Folien hergestellter Wabenkörper erläutert wird.

Besonders günstig ist es, wenn die Anzahl A der Kanäle im Querschnitt des Wabenkörpers mindestens 500 cpsi (cells per squareinch) beträgt. Die Dicke d der Kanalwände, die die Kanäle voneinander trennen, sollte durchschnittlich höchstens 40 Mikrometer, vorzugsweise höchstens 35 Mikrometer, insbesondere zwischen 18 und 32 Mikrometer betragen.

(c)

$$A >= 500 \text{ cpsi}$$

(d)

$$d < 40 \text{ Mikrometer}$$

Bei metallischen Wabenkörpern aus geschichteten und/oder gewickelten, zumindest teilweise strukturierten Blechlagen, gibt es einen Zusammenhang zwischen der Anzahl A der Kanäle pro Querschnittsfläche des Wabenkörpers und der Dicke d der Blechlagen. Bei relativ wenigen Kanälen pro Querschnittsfläche haben die Kanäle selbst relativ große Abmessungen, so daß die Kanalwände relativ dick sein müssen, damit sie nicht im pulsierenden Abgasstrom schwingen und im Dauerbetrieb beschädigt werden. Je kleiner die Kanalquerschnitte sind, desto kürzer sind die freischwingenden Abschnitte der strukturierten Blechlagen, die die Kanalwände bilden. Die Blechlagen können daher dünner sein, ohne daß sich die Schwingungsneigung erhöht. Dieser Effekt ist für die vorliegende Erfindung sehr wichtig, da sich große Anzahlen A an Kanälen pro Querschnittsfläche im Hinblick auf unerwünschte Druckverluste nur verwirklichen lassen, wenn die Kanalwände sehr dünn sind.

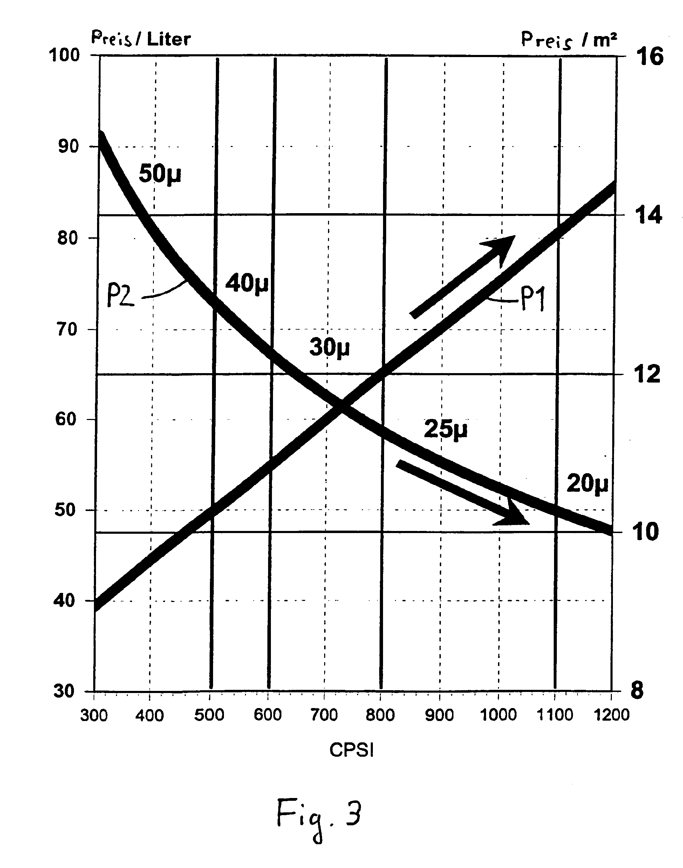

Da wegen der Korrosionsfestigkeit für Katalysatoren nur Stahlbleche mit hohem Chrom- und Aluminiumgehalt eingesetzt werden, die verhältnismäßig schwer gewalzt werden können, ging die Fachwelt richtigerweise davon aus, daß die Herstellungskosten für solche Stahlfolien mit abnehmender Dicke zunehmen. Eine genaue Betrachtung, wie sie anhand von Figur 3 noch näher erläutert wird, zeigt jedoch, daß tatsächlich der Preis für die geometrische Oberfläche O, auf die es ganz wesentlich bei der Effektivität E eines Katalysators ankommt, um so geringer wird, je höher die Anzahl A an Kanälen pro Querschnittseinheit in einem Wabenkörper ist, wenn die Dicke d der Folien entsprechend reduziert wird. Die überraschende Erkenntnis der vorliegenden Erfindung ist daher, daß zumindest für metallische Wabenkörper die Kosten zur Erreichung der notwendigen Effektivität eines Katalysators abnehmen, je größer das Verhältnis von Anzahl A der Kanäle pro Querschnittsfläche zum Volumen V des Wabenkörpers ist, sofern jeweils die Dicke d der Folie auf das jeweils von der Schwingungsneigung her zulässige Maß gesenkt wird. Während natürlich der Preis pro Liter Katalysatorvolumen nahezu linear mit der Anzahl A der Kanäle pro Querschnittseinheit in diesem Volumen ansteigt und daher größere Anzahlen A von Kanälen nicht unbedingt als kostengünstig erkannt werden konnten, ist tatsächlich eine Steigerung der Anzahl A der Kanäle und eine gleichzeitige Verringerung des Volumens V besonders günstig.

Unter diesen Gesichtspunkten werden erfindungsgemäß insbesondere Wabenkörper mit mindestens 600 cpsi und einer durchschnittlichen Dicke d der Kanalwände von höchstens 32 Mikrometer vorgeschlagen.

Im folgenden wird die Erfindung anhand der Zeichnung noch näher erläutert. Es zeigen

Figur 1     eine Brennkraftmaschine mit einem nachgeschalteten Katalysator,

Figur 2     eine perspektivische schematische Ansicht eines Katalysators und

Figur 3     ein Diagramm zur Veranschaulichung des Preises von Volumen bzw. Oberfläche in einem metallischen Wabenkörper in Abhängigkeit von der Anzahl A der Kanäle pro Querschnittseinheit.

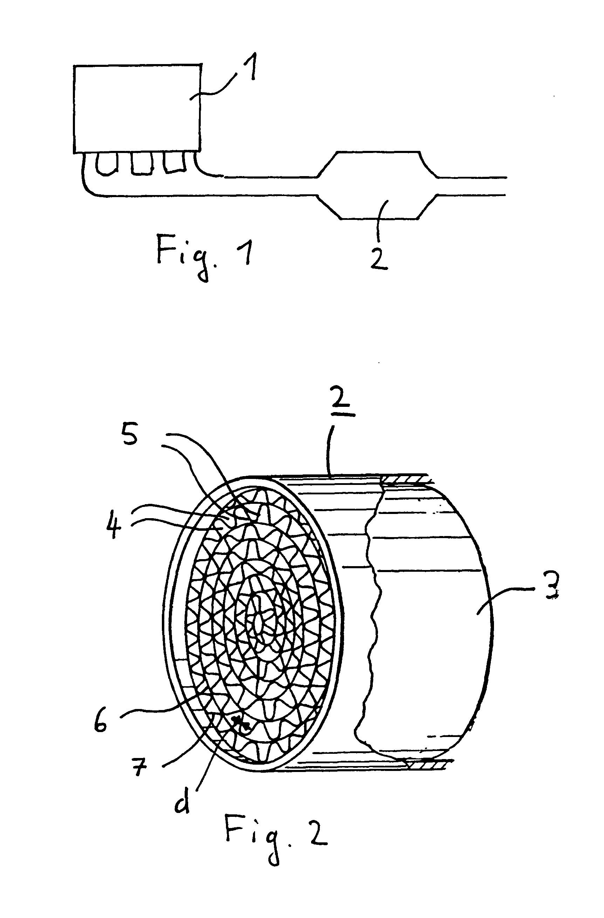

Figur 1 zeigt einen Verbrennungsmotor 1, dem ein Katalysator 2 nachgeschaltet ist. Typischerweise ist ein solcher Katalysator 2 aus einem oder mehreren Wabenkörpern aufgebaut und im Motorraum oder unter der Bodenwanne eines Kraftfahrzeuges angeordnet.

Figur 2 zeigt einen Katalysator 2, der einen Wabenkörper 3 enthält. Dieser Wabenkörper 3 ist im vorliegenden Ausführungsbeispiel der Erfindung, auf das diese jedoch nicht beschränkt ist, aus abwechselnden glatten 6 und gewellten 7 Blechlagen aufgebaut, welche Kanäle 4 bilden. Die Blechlagen 6, 7 bilden die Kanalwände 5 mit einer durchschnittlichen Dicke d. Die Blechlagen 6, 7 stellen zusammen die geometrische Oberfläche O des Wabenkörpers 3 her. Allerdings sind die Blechlagen 6, 7 noch mit einem keramischen sogenannten Washcoat auf Aluminiumoxidbasis beschichtet, wodurch eine sehr große poröse Oberfläche entsteht, die noch um ein Vielfaches größer sein kann als die geometrische Oberfläche O. Auf dem nicht dargestellten Washcoat wird eine katalytisch aktive Substanz, insbesondere eine Mischung verschiedener Edelmetalle, aufgebracht.

Figur 3 zeigt in einem Diagramm auf der x-Achse die Anzahl A der Kanäle 4 pro Querschnittsflächeneinheit (cpsi), während in y-Richtung auf der linken Seite der Preis pro Wabenkörpervolumen (Preis/Liter) und auf der rechten Seite der Preis pro Fläche (Preis/Quadratmeter) aufgetragen ist. Durch senkrechte Linien sind dabei die Bereiche gekennzeichnet, in denen typische am Markt vorhandene Dicken d von Metallfolien eingesetzt werden können. Man erkennt, daß für bis zu 500 cpsi Metallfolien von 50 Mikrometer Dicke besonders geeignet sind, für 500 - 600 cpsi Folien mit 40 Mikrometer Dicke, für 600 - 800 cpsi Folien von 30 Mikrometer Dicke, wobei für noch größere Anzahlen von Kanälen pro Querschnittseinheit noch dünnere Folien eingesetzt werden sollten. Die Linie P1 in dem Diagramm veranschaulicht, wie der Preis pro Liter mit zunehmender Anzahl A an Kanälen 4 pro Querschnittseinheit zunimmt. Viel wichtiger für die vorliegende Erfindung ist jedoch, daß die Kurve P2 zeigt, wie der Preis pro Quadratmeter bei zunehmender Anzahl A an Kanälen 4 pro Querschnittseinheit abnimmt. Für erfindungsgemäße Wabenkörper bedeutet dies, daß ein kleinvolumiger Wabenkörper mit großer Anzahl an Kanälen, bei gleicher geometrischer Oberfläche O preisgünstiger ist als ein Wabenkörper mit größerem Volumen.

Die vorliegende Erfindung lehrt daher den preisgünstigen Einsatz von kleinvolumigen Katalysatoren mit einer großen Anzahl A von Kanälen 4 pro Querschnittsfläche, insbesondere die Anwendung von Metallfolien einer Dicke von durchschnittlich etwa 25 Mikrometer oder sogar 20 Mikrometer für Wabenkörper mit mehr als 800 cpsi bis hin zu 1.200 cpsi. Mit solchen Wabenkörpern kann eine Effektivität von 98 %, vorzugsweise sogar 99 %, erreicht werden, selbst wenn das Volumen V eines einer Brennkraftmaschine 1 nachgeschalteten Katalysators 2 nur etwa die Hälfte oder weniger des Hubraums H der Brennkraftmaschine 1 beträgt.

Bezugszeichenliste

| 1 | Brennkraftmaschine |
| 2 | Katalysator |
| 3 | Wabenkörper |
| 4 | Kanal |
| 5 | Kanalwand |
| 6 | glatte Blechlage |
| 7 | strukturierte Blechlage |

| A | Anzahl der Kanäle |
| d | Dicke der Kanalwand |
| H | Hubraum |
| E | Effektivität |
| O | geometrische Oberfläche |
| V | Volumen |

| P 1 | Preis pro Volumeneinheit |
| P2 | Preis pro geometrischer Oberflächeneinheit |

**Patentansprüche**

1. Brennkraftmaschine (1) mit einem Hubraum H und mit einem nachgeschalteten Katalysator (2) zur Abgasreinigung, wobei

 - der Katalysator (2) eine geometrische Oberfläche O hat,
 - der Katalysator (2) eine Effektivitiät E zur Umsetzung mindestens einer schädlichen Komponente im Abgas in unschädliche Bestandteile hat und
 - der Katalysator (2) mindestens einen Wabenkörper (3) aufweist und
 - alle Wabenkörper (3) zusammen ein Gesamtvolumen V haben,

 **dadurch gekennzeichnet, daß**

 - das Volumen V so gewählt ist, daß es mindestens um den Faktor 0,6 kleiner ist als der Hubraum H, und die geometrische Oberfläche O dabei aber so bemessen ist, daß der Katalysator (2) eine Effektivität E von mehr als 98% hat.

2. Brennkraftmaschine (1) nach Anspruch 1, **dadurch gekennzeichnet, daß** der Wabenkörper (3) für Abgas durchströmbare Kanäle (4) aufweist, wobei die Anzahl A der Kanäle (4) im Querschnitt des Wabenkörpers (3) mindestens 500 cpsi (cells per squareinch) beträgt.

3. Brennkraftmaschine nach Anspruch 1 oder 2, **dadurch gekennzeichnet, daß** der Wabenkörper (3) ein metallischer Wabenkörper (3) aus geschichteten und/oder gewickelten, zumindest teilweise strukturierten Blechlagen (6, 7) ist.

4. Brennkraftmaschine (1) nach einem der Ansprüche 2 oder 3, **dadurch gekennzeichnet, daß** die Kanäle (4) durch Kanalwände (5) voneinander getrennt sind, deren durchschnittliche Dicke (d) höchstens 40 Mikrometer, vorzugsweise höchstens 35 Mikrometer, insbesondere zwischen 18 und 32 Mikrometer beträgt.

5. Brennkraftmaschine (1) nach einem der Ansprüche 2 oder 3, **dadurch gekennzeichnet, daß** die Anzahl (A) der Kanäle (4) des Wabenkörpers (3) über einen Querschnitt durch den Wabenkörper (3) mindestens 600 cpsi beträgt, während die durchschnittliche Dicke (d) der Kanalwände (5) höchstens 32 Mikrometer beträgt.

6. Brennkraftmaschine (1) nach einem der vorhergehenden Ansprüche, **dadurch gekennzeichnet, daß** der Katalysator ein Dreiwegekatalysator ist und im Normalbetrieb mindestens 98 % von im Abgas vorhandenen Kohlenwasserstoffen und Stickoxiden umsetzt, vorzugsweise mindestens 99%.

7.  Brennkraftmaschine (1) nach einem der vorhergehenden Ansprüche, **dadurch gekennzeichnet, daß** der Wabenkörper (3) eine Anzahl von Kanälen (4) von mehr als 750 cpsi und ein Volumen V von weniger als dem 0,5-fachen des Hubraums H aufweist.

8.  Brennkraftmaschine nach Anspruch 7, **dadurch gekennzeichnet, daß** die durchschnittliche Dicke (d) der Kanalwände (5) des Wabenkörpers (3) kleiner als 32 Mikrometer ist, vorzugsweise etwa 25 Mikrometer.

**Claims**

1.  A combustion engine (1) with a piston displacement H and with a catalytic converter (2) disposed downstream for cleaning exhaust gases,

    - said catalytic converter (2) having a geometric surface O,
    - said catalytic converter (2) having an effectiveness E for converting at least one harmful component in the exhaust gas into harmless components and
    - the catalytic converter (2) having at least one honeycomb body (3) and
    - all honeycomb bodies (3) together having a total volume V,

    **characterized in that**

    - the volume V has been chosen so that it is at least smaller than said piston displacement H by at least the factor of 0,6, but the geometric surface O dimensioned to provide the catalytic converter (2) with an effectiveness E of more than 98 %.

2.  Combustion engine (1) according to claim 1, **characterized in that** the honeycomb body (3) has channels (4) through which exhaust gas can flow, the number (A) of the channels (4) over the cross-section of the honeycomb body (3) being at least 500 cpsi (cells per square inch).

3.  Combustion engine according to claim 1 or 2, **characterized in that** the honeycomb body (3) is a metallic honeycomb body (3) having at least one of layered and/or wound sheet metal layers (6,7) being at least partially structured.

4.  Combustion engine (1) according to one of claims 2 or 3, **characterized in that** the channels (4) are separated from one another by channel walls (5) having an average thickness (d) of at most 40 micrometers, preferably at most 35 micrometers, particularly between 18 and 32 micrometers.

5.  Combustion engine (1) according to one of claims 2 or 3, **characterized in that** the number (A) of the channels (4) of the honeycomb body (3) over a cross-section through the honeycomb body (3) being at least 600 cpsi, whereas the average thickness (d) of the channel walls (5) being at most 32 micrometers.

6.  Combustion engine (1) according to one of the preceding claims, **characterized in that** the catalytic converter is a three-way catalytic converter converting at least 98 %, preferably at least 99 % of hydrocarbons and nitrous oxides in the exhaust gases during normal operation.

7.  Combustion engine (1) according to one of the preceding claims, **characterized in that** the honeycomb body (3) has a number of channels (4) of more than 750 cpsi and a volume V of less than 0.5 times said piston displacement H.

8.  Combustion engine according to claim 7, **characterized in that** the average thickness (d) of the channel walls (5) of the honeycomb body (3) is less than 32 micrometers, preferably approximately 25 micrometers.

**Revendications**

1.  Machine à combustion interne (1) avec une cylindrée H et avec un catalyseur (2) disposé en aval pour l'épuration de gaz d'échappement, dans le cas de laquelle,

    - le catalyseur (2) a une surface géométrique O,
    - le catalyseur (2) a une effectivité E pour transformer au moins un composant nocif dans le gaz d'échappement en des constituants qui ne sont pas nuisibles et
    - le catalyseur (2) a au moins un corps en nids d'abeilles (3) et
    - tous les corps en nids d'abeilles (3) ont ensemble un volume total V,

    **caractérisée en ce que**

    - le volume V est choisi de manière telle qu'il est au moins 0,6 fois (= facteur) plus petit que la cylindrée H, et la surface géométrique O par contre est dimensionnée dans ce cas de telle façon que le catalyseur (2) a une effectivité E de plus de 98 %.

**2.** Machine à combustion interne (1) selon la revendication 1, **caractérisée en ce que** le corps en nids d'abeilles (3) a des canaux (4) à travers lesquels du gaz d'échappement peut s'écouler, le nombre A des canaux (4) comportant au moins 500 cpsi (cells per squareinch) dans la section transversale du corps en nids d'abeilles (3).

**3.** Machine à combustion interne selon la revendication 1 ou 2, **caractérisée en ce que** le corps en nids d'abeilles (3) est un corps en nids d'abeilles métallique (3) à partir de couches de tôles empilées et/ou enroulées, au moins partiellement structurées (6, 7).

**4.** Machine à combustion interne (1) selon l'une des revendications 2 ou 3, **caractérisée en ce que** les canaux (4) sont séparés les uns des autres par des parois de canaux (5), dont l'épaisseur moyenne (d) comporte au maximum 40 micromètres, de préférence au maximum 35 micromètres, notamment entre 18 et 32 micromètres.

**5.** Machine à combustion interne (1) selon l'une des revendications 2 ou 3, **caractérisée en ce que** le nombre (A) des canaux (4) du corps en nids d'abeilles (3) comporte au moins 600 cpsi, tandis que l'épaisseur moyenne (d) des parois de canaux (5) comporte au maximum 32 micromètres.

**6.** Machine à combustion interne (1) selon l'une des revendications précédentes, **caractérisée en ce que** le catalyseur est un catalyseur à trois voies qui durant l'opération normale transforme au moins 98 % d'hydrocarbures et d'oxydes d'azote, se trouvant dans le gaz d'échappement, de préférence au moins 99 %.

**7.** Machine à combustion interne (1) selon l'une des revendications précédentes, **caractérisée en ce que** le corps en nids d'abeilles (3) a un nombre de canaux (4) de plus de 750 cpsi et un volume V de moins de 0,5 fois la cylindrée H.

**8.** Machine à combustion interne selon la revendication 7, **caractérisée en ce que** l'épaisseur moyenne (d) des parois des canaux (5) du corps en nids d'abeilles (3) est plus mince que 32 micromètres, elle a de préférence environ 25 micromètres.

Fig. 1

Fig. 2

Fig. 3

**EP 1 177 370 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9101178 A
- US 5802845 A